# EUROPEAN PATENT SPECIFICATION

(11) **EP 3 827 492 B1**
(45) Date of publication and mention of the grant of the patent: **03.09.2025**
(21) Application number: 19749857.9
(22) Date of filing: 19.07.2019
(51) Int. Cl.: H02G 3/32, H02G 3/04, H02S 40/30, H02S 40/36

(54) **DEVICE AND METHOD FOR GUIDING AND PROTECTING AT LEAST ONE ELECTRIC CABLE IN A SOLAR PANEL MOUNTING SYSTEM**
VORRICHTUNG UND VERFAHREN ZUM FÜHREN UND SCHÜTZEN VON MINDESTENS EINEM STROMKABEL IN EINEM SOLARPANEELMONTAGESYSTEM
DISPOSITIF ET PROCÉDÉ DE GUIDAGE ET DE PROTECTION D'AU MOINS UN CÂBLE ÉLECTRIQUE DANS UN SYSTÈME DE MONTAGE DE PANNEAU SOLAIRE

(30) Priority: 23.07.2018 NL 2021379
(43) Date of publication of application: 02.06.2021
(73) Proprietor: Enstall Europe B.V., 7418 EE Deventer (NL)
(72) Inventor: SMIT, Maarten, Alexander, 7418 EE Deventer (NL)
(74) Representative: Patentwerk B.V.
(86) International application number: PCT/NL2019/050460
(87) International publication number: WO 2020/022880

(56) References cited:
- EP-A1- 2 879 252
- EP-A1- 2 879 252
- WO-A1-2019/115100
- US-A1- 2008 265 106
- US-A1- 2008 265 106
- US-A1- 2012 286 110
- US-A1- 2017 194 902
- US-A1- 2017 194 902

## Description

The invention relates to a device for guiding and protecting at least one electric cable in a solar panel mounting system. The invention also relates to an assembly of a support structure and a device according such device. The invention also relates to the use of such device. The invention furthermore relates to a method for guiding and protecting electric cables in a solar panel mounting system.

Solar energy systems making use of solar panels require electric cables and/or wiring for for example the transport of electrical energy and/or for interconnection between solar panels and other electrical components in the solar energy system. The implementation of a cable management system is desired in order to provide a solar energy system wherein the cables are properly routed and organized to ensure optimal functioning of the cables, also while withstanding environmental influences. Malfunctioning of one or more cables of the solar energy system is highly undesirable as this may affect the performance of the entire system. Furthermore it can even be difficult to detect which cable is causing the disturbance. Therefore an adequate cable management system for example prevents that cables are directly exposed to sunlight and/or that excessive bending of cables can occur. A device for guiding and protecting at least one electric cable is known from US2012/286110A1.

However, there is a need to further improve cable management systems of solar energy systems.

It is an object of the invention to provide a device for guiding and/or protecting at least one electric cable in a solar energy system.

The invention thereto provides a device for guiding and protecting electric cables in a solar panel mounting system, comprising at least one coupling element configured for attaching the device to a metal containing support structure for at least one solar panel, in particular a metal containing support rail of a support structure for at least one solar panel, and at least one housing connected to said at least one coupling element, said housing defining at least one receiving space for receiving at least a part of at least one electric cable, and the housing comprising at least one guiding surface for support and/or guidance of at least one electric cable, wherein the housing, and preferably the device as such, is at least partially and preferably entirely made of an insulating material, in particular a plastic material, and wherein the guiding surface of the housing, is configured to extend from opposing sides of the underlying support structure, in particular the support rail, when the device is attached to the support structure, in particular the support rail, such that the housing forms an insulating barrier between the support structure, in particular the support rail, and at least one electric cable guided by the housing, wherein the housing comprises at least two opposing side walls defining athe receiving space for receiving at least one electric cable, and preferably for receiving multiple electric cables, wherein the side walls of the housing are at least partially rounded and wherein an access opening for receiving at least one electric cable into the receiving space is located between the aforementioned opposing side walls, such that the housing defines a cylinder which is interrupted in its longitudinal direction.

The device according to the invention provides both guidance for electric cables in a solar panel mounting system as well as protection for said cables. The device provides guidance of at least part of at least one electric cable in a solar panel mounting system due to that housing comprises a receiving space and a guiding surface. The at least one electric cable can be inserted into the receiving space whereby the electric cable subsequently will be positioned, directly or indirectly, on the guiding surface. The guiding surface provides both guidance and support for the electric cable due to its substantially elongated appearance as the guiding surface extends from both sides of the underlying support structure. Due to this support and guidance provided by the guiding surface malfunctioning of the cable(s) due to bending and/or the formation of kinks in said cable can be prevented. This will result in a reduced chance of damaging or weakening of said cable. The guidance of the electric cables therefore also provides mechanical protection of the electric cables. The device is furthermore configured to provide electrical protection for at least one cable and for the system in general. The combination of the device being at least partially manufactured of an insulating material, in particular a plastic material, and the device comprising a housing configured to provide an insulating barrier between at least one electric cable and the support structure a two-fold protection for the cable is obtained thereby preventing any possible contact, in particular, electrical contact between the cable and the support structure. Due to the device being at least partially made of insulating material the device forms a protective barrier between the metal containing support structure and the at least one electric cable. Due to the guiding surface of the housing extending from opposing sides of the underlying support structure when the device is attached to the support structure the at least one cable is basically guided away from the support structure. The guiding surface thereby forms a further protective barrier preventing any contact or engagement between the cable and the support structure. The metal containing support structures of a solar panel mounting system, in particular a metal containing support rail of a support structure, may in particular cause dangerous situation when an electric cable, which is used in the solar systems, gets damaged or partly impaired. In particular the risks of electrical contact between at least one electric cable and the support structure may occur when the electric cable is damaged or partly impaired. Damage of electric cables can occur due to kinks and/or bends in such cable. As the device prevents both malfunctioning of the electric cables and any contact between the electric cables and the metal containing support structure, this results in that using the device according to the invention may significantly improve the safety of the entire solar system.

That the device comprises at least one coupling element is beneficial for the ease of use of the device. The coupling element provides the possibility to connect the device with the support structure, in particular the support rail in a relative simple and fast manner. The device is also suitable and configured for guidance and protection of a bundle of electric cables. When is referred to an electric cable this can be any type of cable used in a solar panel mounting system and/or a solar energy system. Non-limiting examples of electric cables are double insulated cables, single insulated cables, solar cables. The cables can be used for AC and/or DC current. The term cable is within this context replaceable for the term wire. The device according to the invention is in particular configured to be connected with the support structure, in particular the support rail, before cooperation with at least one cable is initiated.

The housing comprises at least two opposing side walls defining a receiving space for receiving at least one electric cable, and preferably for receiving multiple electric cables. The side walls of the housing thereby define a further protective boundary for the at least one cable by forming both a mechanical boundary and an insulating boundary. The presence of opposing side wall may thereby prevent at least one electric cable to slip away or to drop from the guiding surface. Furthermore, the opposing side walls may enhance the guiding of the at least one electric cable as the cable may engage an inner wall of a such side wall. The side wall(s) can therefore act as secondary guiding surface(s). The side walls preferably protrude from opposing sides of the guiding surface. A first side wall of the opposing side walls is generally positioned at a distance from a second side wall of the opposing side walls. The first side wall thereby preferably does not directly engage the second side wall. The side walls of the housing according to the present invention are at least partially rounded, which may result in a more form-fitting engagement by at least one electric cable received in the receiving space of the housing, wherefore guidance of the at least one cable can be further improved.

The housing comprises at least one, preferably elongated, access opening for receiving at least one electric cable into the receiving space. The access opening can also be referred to as slot. The access opening is in particular configured to receive at least one electric cable in its length direction. This is beneficial as it facilitates easy access of the at least one electric cable into the receiving space after the device is attached to the support structure in a relative simple manner. The access opening is located between the aforementioned opposing side walls, such that the housing defines at least part of a cylinder. The housing defines a cylinder which is interrupted in its longitudinal direction. The typically elongated access opening, also referred to as slot, is preferably substantially parallel to guiding surface. The access opening is in a preferred embodiment provided in an upper side of the housing. This configuration will provide a further improved accessibility of the at least one electric cable into the receiving space of the housing while the housing, an in particular the side walls thereof, can maintain its protective characteristics.

An embodiment of the device is possible, wherein the longitudinal axis of the housing, in particular the longitudinal axis of the guiding surface of the housing, extends at an angle with respect to a longitudinal axis of the support structure, in particular the support rail when the device is attached to the support structure, in particular the support rail. In this embodiment, the device can act as a bridging structure for the at least one electric cable within the solar panel system. The longitudinal axis of the housing and/or the guiding surface can for example extend at an angle between 30 and 90 degrees with respect to the longitudinal axis of the support structure, in particular the support rail. The longitudinal axis of the housing and/or the guiding surface will generally extend at an angle between 45 and 90 degrees with respect to the longitudinal axis of the support structure, in particular the support rail.

The guiding surface of the housing extends for example at least 0.5 centimetre from both sides with respect to the underlying support structure, in particular the support rail, when the device is attached thereon. It is also possible that the guiding surface of the housing of the housing extends for example at least 1 centimetre from both sides with respect to the underlying support structure, in particular the support rail, when the device is attached thereon. It is possible that the extension of the guiding surface with respect to the underlying support structure is per extending side of the guiding surface between 0.5 and 5 centimetre, in particular between 1 and 4 centimetre. It is herewith possible that the extension of one side of the guiding surface is larger than the extension of the other side. Typically, a support structure suitable for co-action with a device according to the invention is formed by a (metal) mounting rail. A typical width of a known mounting rail is about 4-6 centimetre. Hence, preferably the length of the guiding surface is at least 8 centimetre to secure sufficient extension to prevent the cables to contact the mounting rail.

According to the invention the guiding surface comprises at least one substantially conical outwardly projecting rim. The presence of such rim may further reduce the chance of malfunctioning of at least one electric cable as it may provide improved guidance of the cable. The conical outwardly projecting rim may furthermore facilitate controlled bending and/or a change of direction of the at least one electric cable. It is both possible that the device has one or two substantially conically shaped terminal portion.

The device is in a preferred embodiment at least partially and preferably entirely made of polyamide. Polyamide is suitable for use as an insulating material, in particular as electrical insulating material. The device can for example be made of a polyamide compound comprising PA6 and/or PA66. The use of plastic materials such as polyamide is beneficial as plastics are relatively cheap and therefore the productions costs of the device can be relatively low. It is also conceivable for the device to be made from one or more plastics. It is in a further embodiment possible that the polyamide is a glass fibre reinforced polyamide, preferably wherein the glass fibre reinforced polyamide has a glass reinforced grade in the range of 20-80%, preferably in the range of 30-50%. The glass reinforced grade can also for example be in the range of 25-35%, more in particular 30%. With the use of this type of polyamide the mechanical strength and/or the elasticity of the device can be enhanced while maintaining the desired insulating properties.

In a preferred embodiment is the device manufactured of a single piece. Herewith the use of additional materials and/or components such as glue and/or mechanical fastening means can be omitted which may contribute to a more rigid device. This can furthermore have a positive influence on the insulating characteristics of the device. The device can for example be produced by means of a one-step process, such as for example by means of extrusion or injection-moulding. This is beneficial as this are relatively inexpensive production processes.

It is beneficial if at least one coupling element of the device is at least partially flexible. Herewith coupling of the device with the support structure, in particular the support rail can be simplified. The coupling element of the device can for example comprise at least one at least one, preferably deformable, hook-shaped fastening member. When the coupling element comprises at least one hook-shaped fastening member the device can easily be attached, preferably be hooked securely and/or be clamped securely, in particular by means of a snap arrangement, to a support structure, in particular a support rail of the support structure for solar panels, without this requiring separate fastening elements, such as screws. In this case, it is advantageous if at least part of the coupling element, preferably at least part of each hook-shaped fastening element (if used), is deformable, in particular flexible. An embodiment is possible wherein the device comprises several coupling elements for attaching the device to the support structure, in particular the support rail, with each coupling element comprising at least one, preferably deformable, hook-shaped fastening member and with the coupling elements being configured for enclosing at least part of the support rail. Herewith the stability of the device when attached to the support structure, in particular the support rail, can be enhanced. Preferably is at least one hook-shaped fastening member, which is configured for attaching the device to the support structure, in particular the support rail, connected to a bottom side of the housing. The bottom side of the housing is facing towards the support structure whereupon the device can be attached. The bottom side can at least partially be defined by the back side of the guiding surface. In a preferred embodiment are the hook-shaped fastening members configured for realizing a snap connection with the support structure, in particular the support rail. This will further improve the ease of use of the device. Preferably, the device comprises at least two opposing coupling elements, wherein the (free) terminal portions of the opposing coupling elements are positioned at a distance from each other. The coupling elements enclose an accommodating space for accommodating a support structure, in particular a mounting rail, at least partially. Preferably, the distance between the terminal portions of the opposing coupling elements is sufficiently large to substantially unhindered insert a lateral side, also referred to as side wall, of the mounting rail into the accommodating space. More preferably, the distance between the terminal portions of the opposing coupling element is sufficiently to substantially secure a top side, also referred to as side wall, of the mounting rail into the accommodating. This makes it possible to install the device onto a mounting rail in a relatively easy manner, by firstly inserting the lateral wall of the mounting rail into the accommodating space, and by subsequently turning (rotating) the device with respect to the mounting rail, over a typical angle of 90 degrees, to secure the device onto the mounting rail. During this rotation, the coupling elements will commonly slightly deform (temporarily), wherein the distance between the terminal portions of the opposing element will increase during rotation, and will return to its original state once the device is supported by and/or facing the top side of the mounting rail.

In a further possible embodiment comprises housing at least one aperture for accommodating at least part of at least one cable tie for securing at least one electric cable in the housing. A cable tie comprises a substantially planar strap and a head configured for self-locking of the strap. Cable ties are commonly known for fastening and/or holding items, such as electric cables, together. The cable tie is generally made of nylon, which benefits of being an insulating materials. With the device comprising at least one aperture for accommodating at least one cable tie the protection of electric cables while using the device according to the invention can be further optimized. The at least one cable tie can for example be preassembled to the device by pulling the cable tie through the aperture. The cable is preferably locked after at least one electric cable is received in the housing. It is desirable that at least one aperture is present at an extending part of the guiding surface. At this point, near at least one outer end of the guiding surface, can the highest benefit for improving the protection of the cable(s) be obtained. It can furthermore be prevented that the at least one cable will slip away or drop from the guiding surface.

In a possible embodiment of the device is the at least one coupling element positioned at a distance from a peripheral edge of the guiding surface. As a result thereof is a circumferential protective boundary present around the at least one coupling element. This may further contribute to the at least one electric cable being positioned at a sufficient distance from the metal containing support structure in order to prevent any contact between said cable and said support structure.

Another embodiment of the device according to the invention is possible wherein the at least one coupling element encloses an accommodating space for accommodating a support structure at least partially, wherein the centre of said accommodating space is positioned right below the centre of the guiding surface. This embodiment can further ensure a stable positioning of the device on the support structure.

The invention furthermore relates to an assembly of a support structure and a device as described above, wherein the device is attached, preferably by clamping, to the support structure.

The invention also relates to the use of a device for guiding and protecting electric cables in a solar panel mounting system according to the invention as described above, wherein the device is attached, preferably by clamping, to a support structure of the solar panel mounting system. The use of such device has similar benefits as the benefits described above.

The invention furthermore relates to a method for guiding and protecting electric cables in a solar panel mounting system, preferably by using at least one device as described above, the method comprising the steps of:
A) attaching the device to a support structure for at least one solar panel by means of the at least one coupling element of the device, in particular to a support rail of a support structure for at least one solar panel, and
B) inserting at least part of at least one electric cable into the receiving space of the housing such that at least one electric cable is positioned on the guiding surface of the housing.

It is also possible that the method comprises step C): securing at least one electric cable by means of at least one cable tie.

The invention will be further elucidated herein below on the basis of the non-limitative exemplary embodiments shown in the following figures. Herein shows;
figure 1 a possible embodiment of a device according to the invention;
figure 2 a cross section of the device as shown in figure 1 when attached to a support rail; and
figures 3a-f a solar panel mounting system making use of multiple devices as shown in figures 1 and 2.

Similar references correspond to similar or equivalent components or features in these figures.

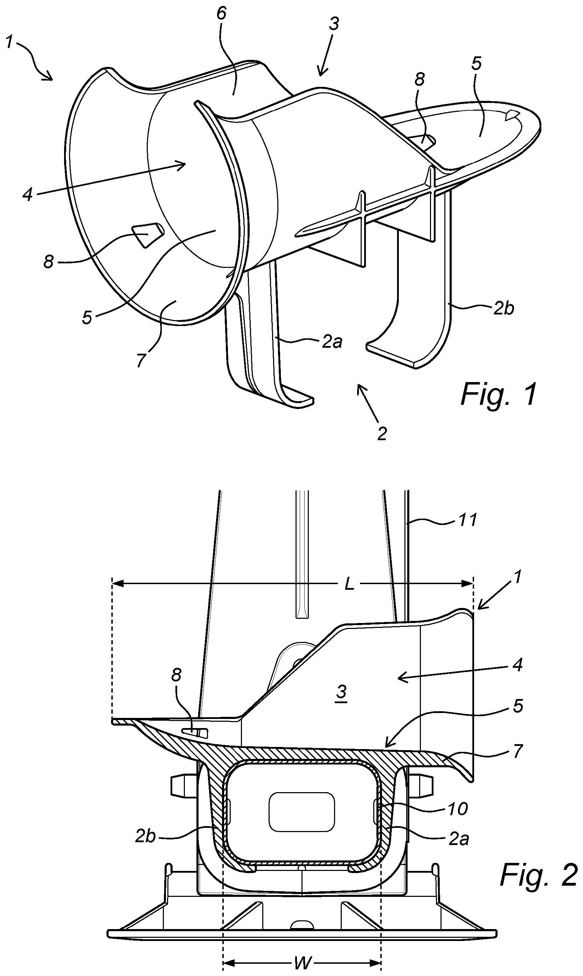

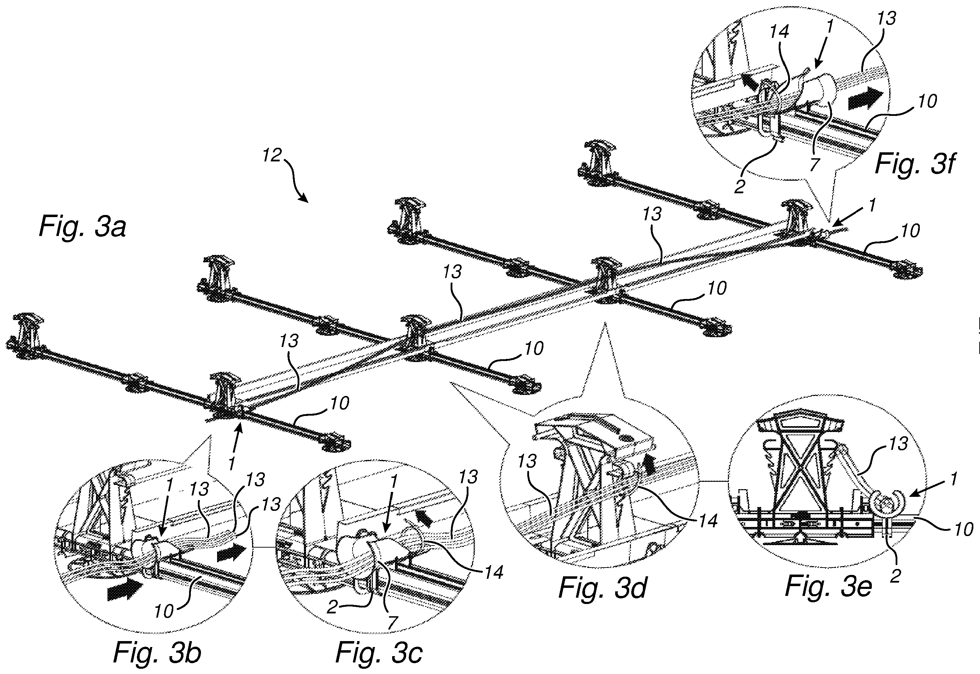

Figure 1 shows a perspective view of a possible embodiment of a device 1 according to the invention. The device 1 is configured for guiding and protecting electric cables in a solar panel mounting system, as is shown in figure 3. The device 1 comprises an coupling element 2 configured for attaching the device 1 to a metal containing support structure and a housing 3 connected to said coupling element 2. The housing 3 defines a receiving space 4 for receiving at least a part of at least one electric cable. In the shown embodiment is the housing 3 partially shaped as an interrupted cylinder. Furthermore, the housing 3 comprises a guiding surface 5 for support and/or guidance of at least one electric cable. The guiding surface 5 of the housing 3 is extended with respect to the coupling element 2, as it is configured to extends from opposing sides of the underlying support structure when the device 1 is attached to the support structure. The housing 3 comprises an elongated access opening 6 for receiving one or more electric cables. This access opening 6 is provided in an upper side of the housing 3. The access opening of the housing 3 allows easy entry of the cable(s) into the receiving space 4. The guiding surface 5 comprises an conical outwardly projecting rim 7. The coupling element 2 is at least partially flexible and comprises two hook-shaped fastening members 2a, 2b for attaching the device 1 to a support rail and are configured for realizing a snap connection therewith. The housing 3 comprises multiple apertures 8 for accommodating at least one cable tie for securing the cable(s) received in the housing 3. The embodiment of the device 1 as shown in figure 1 is entirely made of an insulating material, in particular a plastic material. The device 1 is furthermore manufactured of a single piece.

Figure 2 shows a cross section of the device 1 as shown in figure 1 when attached to a metal containing support structure 10, in particular a support rail 10. The device 1 is securely clamped by means of a snap arrangement to the support rail 10. The two hook-shaped fastening members 2a, 2b therewith co-act with a part of the support rail 10. The effective length L of the guiding surface 5 is larger than the width W of the support rail 10. The figure shows that the device 1 is received within an receiving space of a wind deflector 11 which forms part of the solar panel mounting system. The outwardly projecting rim 7 engages the wind deflector 11.

Figures 3a-3f show a perspective view of a solar panel mounting system 12 making use of multiple devices 1 according to the invention in combination with a bundle of electric cables 13 to be guided and protected by the devices 1. The devices 1 equal the devices 1 as shown in figures 1 and 2. Figure 3a shows an overall picture of the system 12. Figure 3b shows a device 1 which is attached to a metal containing support rail 10. A bundle of electric cables 13 is received in the receiving space 4 of the device. The cables 13 are inserted via the access opening 6 of the device 1. The cables 13 are secured in the device 1 by making use of a cable tie 14, which is shown in figure 3c. Figure 3d shows a fastening point in the system where is made use of cable ties 14 for fastening of the electric cables 13. The cables 13 are positioned at a distance from the metal containing support rail 10. Figure 3e shows a cross-section as from an outer end of the system 12. The figure shows that the electric cables 13 are guided away from the metal containing support rails 10. Figure 3f shows a further device 1 similar to the device 1 in figure 3c. For both devices 1 in figures 3c and 3f are the conical outwardly projecting rims 7 of the device 1 faced towards an outer end of the system where a wind deflector (not shown) is to be placed.

It will be apparent that the invention is not limited to the working examples shown and described herein, but that numerous variants are possible within the scope of the attached claims that will be obvious to a person skilled in the art.

## Claims

1. Electric cables guiding and protecting device (1) for use in a solar panel mounting system, comprising:
- at least one coupling element (2) configured for attaching the device (1) to a metal containing support structure (10) for at least one solar panel, in particular a metal containing support rail of a support structure (10) for at least one solar panel,
and
- at least one housing (3) connected to said at least one coupling element (2), said housing (3) defining at least one receiving space (4) for receiving at least a part of at least one electric cable (13), and the housing (3) comprising at least one guiding surface (5) for support and/or guidance of at least one electric cable (13),
wherein the housing (3), and preferably the device (1) as such, is at least partially and preferably entirely made of an insulating material, in particular a plastic material, and
wherein the guiding surface (5) of the housing (3), is configured to extend from opposing sides of the underlying support structure (10), in particular the support rail, when the device (1) is attached to the support structure (10), in particular the support rail, such that the housing (3) forms an insulating barrier between the support structure (10), in particular the support rail, and at least one electric cable (13) guided by the housing (3),
wherein the housing (3) comprises at least two opposing side walls defining the receiving space (4) for receiving at least one electric cable (13), and preferably for receiving multiple electric cables (13), wherein the side walls of the housing (3) are at least partially rounded and wherein an access opening (6) for receiving at least one electric cable (13) into the receiving space (4) is located between the aforementioned opposing side walls, such that the housing (3) defines a cylinder which is interrupted in its longitudinal direction, **characterized in that** the guiding surface (5) comprises at least one conical outwardly projecting rim (7).

2. Device (1) according to claim 1, wherein the access opening (6) is provided in an upper side of the housing (3).

3. Device (1) according to any of the previous claims, wherein the device (1) is at least partially and preferably entirely made of polyamide in particular wherein the polyamide is a glass fibre reinforced polyamide, preferably wherein the glass fibre reinforced polyamide has a glass reinforced grade in the range of 20-80%, and preferably in the range of 30-60%.

4. Device (1) according to any of the previous claims, wherein the device (1) is manufactured of a single piece.

5. Device (1) according to any of the previous claims, wherein at least one coupling element (2) is at least partially flexible.

6. Device (1) according to any of the previous claims, wherein at least one coupling element (2) comprises at least one, preferably deformable, hook-shaped fastening member (2a, 2b).

7. Device (1) according to claim 6, wherein the device (1) comprises several coupling elements (2) for attaching the device (1) to the support structure (10), in particular the support rail, with each coupling element (2) comprising at least one, preferably deformable, hook-shaped fastening member (2a, 2b) and with the coupling elements (2) being configured for enclosing at least part of the support rail.

8. Device (1) according to claim 6 or 7, wherein the hook-shaped fastening members (2a, 2b) are configured for realizing a snap connection with the support structure, in particular the support rail.

9. Device (1) according to any of the previous claims, wherein the housing (3) comprises at least one aperture (8) for accommodating at least part of at least one cable tie (14) for securing at least one electric cable (13) in the housing (3), wherein preferably at least one aperture (8) is present at an extending part of the guiding surface (5).

10. Device (1) according to any of the previous claims, wherein the at least one coupling element (2) is positioned at a distance from a peripheral edge of the guiding surface (5).

11. Device (1) according to any of the previous claims, wherein the at least one coupling element (2) encloses an accommodating space for accommodating a support structure (10) at least partially, wherein the centre of said accommodating space is positioned right below the centre of the guiding surface (5).

12. Use of a device (1) according to any of the claims 1-11 for guiding and protecting electric cables (13) in a solar panel mounting system, wherein the device (1) is attached, preferably by clamping, to a support structure (10) of the solar panel mounting system.

13. Method for guiding and protecting electric cables (13) in a solar panel mounting system, by using at least one device (1) according to any claims 1-11, comprising the steps of:
A) attaching the device (1) to a support structure (10) for at least one solar panel by
means of the at least one coupling element (2) of the device (1), in particular to a support rail of a support structure (10) for at least one solar panel, and
B) inserting at least part of at least one electric cable (13) into the receiving space (4) of the housing (3) such that at least one electric cable (13) is positioned on the guiding surface (5) of the housing (3).

14. Method according to claim 13, comprising step C) securing at least one electric cable (13) by means of at least one cable tie (14).

## Patentansprüche

1. Elektrische Kabelführungs- und Schutzvorrichtung (1) zur Verwendung in einem Solarpanel-Montagesystem, umfassend:
- mindestens ein Kopplungselement (2), das zum Anbringen der Vorrichtung (1) an einer metallhaltigen Trägerstruktur (10) für mindestens ein Solarpanel, insbesondere einer metallhaltigen Trägerschiene einer Trägerstruktur (10) für mindestens ein Solarpanel, konfiguriert ist,
und
- mindestens ein Gehäuse (3), das mit dem mindestens einen Kopplungselement (2) verbunden ist, wobei das Gehäuse (3) mindestens einen Aufnahmeraum (4) zum Aufnehmen mindestens eines Teils mindestens eines elektrischen Kabels (13) definiert, und das Gehäuse (3) umfassend mindestens eine Führungsfläche (5) zum Tragen und/oder Führen mindestens eines elektrischen Kabels (13),
wobei das Gehäuse (3) und vorzugsweise die Vorrichtung (1) als solche mindestens teilweise und vorzugsweise vollständig aus einem isolierenden Material, insbesondere einem Kunststoffmaterial, gefertigt ist, und
wobei die Führungsfläche (5) des Gehäuses (3) konfiguriert ist, um sich von gegenüberliegenden Seiten der darunter liegenden Trägerstruktur (10), insbesondere der Trägerschiene, zu erstrecken, wenn die Vorrichtung (1) an der Trägerstruktur (10), insbesondere der Trägerschiene, angebracht ist, sodass das Gehäuse (3) eine isolierende Barriere zwischen der Trägerstruktur (10), insbesondere der Trägerschiene, und mindestens einem elektrischen Kabel (13) bildet, das von dem Gehäuse (3) geführt wird,
wobei das Gehäuse (3) mindestens zwei gegenüberliegende, den Aufnahmeraum (4) definierende Seitenwände zum Aufnehmen mindestens eines elektrischen Kabels (13) und vorzugsweise zum Aufnehmen mehrerer elektrischer Kabel (13) umfasst, wobei die Seitenwände des Gehäuses (3) mindestens teilweise abgerundet sind und wobei sich zwischen den vorgenannten gegenüberliegenden Seitenwänden eine Zugangsöffnung (6) zum Aufnehmen mindestens eines elektrischen Kabels (13) in den Aufnahmeraum (4) befindet, sodass das Gehäuse (3) einen in seiner Längsrichtung unterbrochenen Zylinder definiert, **dadurch gekennzeichnet, dass** die Führungsfläche (5) mindestens einen konisch nach außen hervorstehenden Rand (7) umfasst.

2. Vorrichtung (1) nach Anspruch 1, wobei die Zugangsöffnung (6) in einer Oberseite des Gehäuses (3) bereitgestellt ist.

3. Vorrichtung (1) nach einem der vorherigen Ansprüche, wobei die Vorrichtung (1) mindestens teilweise und vorzugsweise vollständig aus Polyamid gefertigt ist, insbesondere wobei das Polyamid ein glasfaserverstärktes Polyamid ist, vorzugsweise wobei das glasfaserverstärkte Polyamid eine glasfaserverstärkte Qualität in dem Bereich von 20-80 % und vorzugsweise in dem Bereich von 30-60 % aufweist.

4. Vorrichtung (1) nach einem der vorherigen Ansprüche, wobei die Vorrichtung (1) aus einem einzigen Stück hergestellt ist.

5. Vorrichtung (1) nach einem der vorherigen Ansprüche, wobei mindestens ein Kopplungselement (2) mindestens teilweise flexibel ist.

6. Vorrichtung (1) nach einem der vorherigen Ansprüche, wobei mindestens ein Kopplungselement (2) mindestens ein, vorzugsweise verformbares, hakenförmiges Befestigungselement (2a, 2b) umfasst.

7. Vorrichtung (1) nach Anspruch 6, wobei die Vorrichtung (1) mehrere Kopplungselemente (2) zum Befestigen der Vorrichtung (1) an der Trägerstruktur (10), insbesondere der Trägerschiene, umfasst, wobei jedes Kopplungselement (2) mindestens ein, vorzugsweise verformbares, hakenförmiges Befestigungselement (2a, 2b) umfasst und wobei die Kopplungselemente (2) zum Umschließen mindestens eines Teils der Trägerschiene konfiguriert sind.

8. Vorrichtung (1) nach Anspruch 6 oder 7, wobei die hakenförmigen Befestigungselemente (2a, 2b) zum Realisieren einer Rastverbindung mit der Trägerstruktur, insbesondere der Trägerschiene, konfiguriert sind.

9. Vorrichtung (1) nach einem der vorherigen Ansprüche, wobei das Gehäuse (3) mindestens eine Öffnung (8) zum Aufnehmen mindestens eines Teils mindestens eines Kabelbinders (14) zum Befestigen mindestens eines elektrischen Kabels (13) in dem Gehäuse (3) umfasst, wobei vorzugsweise mindestens eine Öffnung (8) an einem sich erstreckenden Teil der Führungsfläche (5) vorhanden ist.

10. Vorrichtung (1) nach einem der vorherigen Ansprüche, wobei das mindestens eine Kopplungselement (2) in einem Abstand von einem Umfangsrand der Führungsfläche (5) positioniert ist.

11. Vorrichtung (1) nach einem der vorherigen Ansprüche, wobei das mindestens eine Kopplungselement (2) einen Aufnahmeraum zum mindestens teilweisen Aufnehmen einer Trägerstruktur (10) umschließt, wobei die Mitte dieses Aufnahmeraums direkt unterhalb der Mitte der Führungsfläche (5) positioniert ist.

12. Verwendung einer Vorrichtung (1) nach einem der Ansprüche 1-11 zum Führen und Schützen von elektrischen Kabeln (13) in einem Solarpanel-Montagesystem, wobei die Vorrichtung (1) vorzugsweise durch Klemmen an einer Trägerstruktur (10) des Solarpanel-Montagesystems angebracht ist.

13. Verfahren zum Führen und Schützen von elektrischen Kabeln (13) in einem Solarpanel-Montagesystem unter Verwendung mindestens einer Vorrichtung (1) nach einem der Ansprüche 1-11, umfassend die folgenden Schritte:
A) Anbringen der Vorrichtung (1) an einer Trägerstruktur (10) für mindestens ein Solarpanel mittels des mindestens einen Kopplungselements (2) der Vorrichtung (1), insbesondere an einer Trägerschiene einer Trägerstruktur (10) für mindestens ein Solarpanel, und
B) Einführen mindestens eines Teils mindestens eines elektrischen Kabels (13) in den Aufnahmeraum (4) des Gehäuses (3), sodass mindestens ein elektrisches Kabel (13) auf der Führungsfläche (5) des Gehäuses (3) positioniert ist.

14. Verfahren nach Anspruch 13, umfassend Schritt C) eines Befestigens mindestens eines elektrischen Kabels (13) mittels mindestens eines Kabelbinders (14).

## Revendications

1. Dispositif (1) de guidage et de protection de câbles électriques destiné à être utilisé dans un système de montage de panneau solaire, comprenant :
- au moins un élément de couplage (2) configuré pour fixer le dispositif (1) à une structure de support (10) contenant du métal pour au moins un panneau solaire, en particulier à un rail de support contenant du métal d'une structure de support (10) pour au moins un panneau solaire,
et
- au moins un boîtier (3) relié audit au moins un élément de couplage (2), ledit boîtier (3) définissant au moins un espace de réception (4) pour recevoir au moins une partie d'au moins un câble électrique (13), et le boîtier (3) comprenant au moins une surface de guidage (5) pour supporter et/ou guider au moins un câble électrique (13),
dans lequel le boîtier (3), et de préférence le dispositif (1) en tant que tel, est au moins partiellement, et de préférence entièrement, constitué d'un matériau isolant, en particulier un matériau plastique, et
dans lequel la surface de guidage (5) du boîtier (3) est configurée pour s'étendre à partir de côtés opposés de la structure de support (10) sous-jacente, en particulier du rail de support, lorsque le dispositif (1) est fixé à la structure de support (10), en particulier au rail de support, de sorte que le boîtier (3) forme une barrière isolante entre la structure de support (10), en particulier le rail de support, et au moins un câble électrique (13) guidé par le boîtier (3),
dans lequel le boîtier (3) comprend au moins deux parois latérales opposées définissant l'espace de réception (4) pour recevoir au moins un câble électrique (13), et de préférence pour recevoir plusieurs câbles électriques (13), dans lequel les parois latérales du boîtier (3) sont au moins partiellement arrondies et dans lequel une ouverture d'accès (6) pour recevoir au moins un câble électrique (13) dans l'espace de réception (4) est située entre les parois latérales opposées susmentionnées, de sorte que le boîtier (3) définit un cylindre qui est interrompu dans sa direction longitudinale, **caractérisé en ce que** la surface de guidage (5) comprend au moins un rebord conique faisant saillie vers l'extérieur (7).

2. Dispositif (1) selon la revendication 1, dans lequel l'ouverture d'accès (6) est prévue dans un côté supérieur du boîtier (3).

3. Dispositif (1) selon l'une quelconque des revendications précédentes, dans lequel le dispositif (1) est au moins partiellement, et de préférence entièrement, constitué de polyamide, en particulier dans lequel le polyamide est un polyamide renforcé de fibres de verre, de préférence dans lequel le polyamide renforcé de fibres de verre présente une qualité renforcée de verre dans la plage de 20 à 80 %, et de préférence dans la plage de 30 à 60 %.

4. Dispositif (1) selon l'une quelconque des revendications précédentes, dans lequel le dispositif (1) est fabriqué en une seule pièce.

5. Dispositif (1) selon l'une quelconque des revendications précédentes, dans lequel au moins un élément de couplage (2) est au moins partiellement flexible.

6. Dispositif (1) selon l'une quelconque des revendications précédentes, dans lequel au moins un élément de couplage (2) comprend au moins un élément de fixation en forme de crochet (2a, 2b), de préférence déformable.

7. Dispositif (1) selon la revendication 6, dans lequel le dispositif (1) comprend plusieurs éléments de couplage (2) pour fixer le dispositif (1) à la structure de support (10), en particulier au rail de support, chaque élément de couplage (2) comprenant au moins un élément de fixation en forme de crochet (2a, 2b), de préférence déformable, et les éléments de couplage (2) étant configurés pour renfermer au moins une partie du rail de support.

8. Dispositif (1) selon la revendication 6 ou 7, dans lequel les éléments de fixation en forme de crochet (2a, 2b) sont configurés pour réaliser une liaison par encliquetage avec la structure de support, en particulier le rail de support.

9. Dispositif (1) selon l'une quelconque des revendications précédentes, dans lequel le boîtier (3) comprend au moins un orifice (8) pour recevoir au moins une partie d'au moins un collier de serrage (14) pour fixer au moins un câble électrique (13) dans le boîtier (3), dans lequel de préférence au moins un orifice(8) est présent au niveau d'une partie d'extension de la surface de guidage (5).

10. Dispositif (1) selon l'une quelconque des revendications précédentes, dans lequel l'au moins un élément de couplage (2) est positionné à une certaine distance d'un bord périphérique de la surface de guidage (5).

11. Dispositif (1) selon l'une quelconque des revendications précédentes, dans lequel l'au moins un élément de couplage (2) renferme un espace d'accueil pour accueillir une structure de support (10) au moins partiellement, le centre dudit espace d'accueil étant positionné juste en dessous du centre de la surface de guidage (5).

12. Utilisation d'un dispositif (1) selon l'une quelconque des revendications 1 à 11 pour guider et protéger des câbles électriques (13) dans un système de montage de panneau solaire, dans lequel le dispositif (1) est fixé, de préférence par serrage, à une structure de support (10) du système de montage de panneau solaire.

13. Procédé de guidage et de protection de câbles électriques (13) dans un système de montage de panneau solaire, en utilisant au moins un dispositif (1) selon l'une quelconque des revendications 1 à 11, comprenant les étapes consistant à :
A) fixer le dispositif (1) à une structure de support (10) pour au moins un panneau solaire au moyen de l'au moins un élément de couplage (2) du dispositif (1), en particulier à un rail de support d'une structure de support (10) pour au moins un panneau solaire, et
B) insérer au moins une partie d'au moins un câble électrique (13) dans l'espace de réception (4) du boîtier (3) de sorte qu'au moins un câble électrique (13) soit positionné sur la surface de guidage (5) du boîtier (3).

14. Procédé selon la revendication 13, comprenant l'étape C) de fixation d'au moins un câble électrique (13) au moyen d'au moins un collier de serrage (14).
